# EUROPÄISCHE PATENTSCHRIFT

(11) **EP 3 782 354 B1**
(45) Veröffentlichungstag und Bekanntmachung des Hinweises auf die Patenterteilung: **26.10.2022**
(21) Anmeldenummer: 19718671.1
(22) Anmeldetag: 16.04.2019
(51) Int. Cl.: H04L 67/12

(54) **VERFAHREN ZUR KOMMUNIKATION ZWISCHEN EINER ANWENDUNG UND EINER MASCHINE IN EINER FERTIGUNG**
METHOD FOR COMMUNICATION BETWEEN AN APPLICATION AND A MACHINE IN A FABRICATION
PROCÉDÉ DE COMMUNICATION ENTRE UNE APPLICATION ET UNE MACHINE DANS UN PROCESSUS DE FABRICATION

(30) Priorität: 18.04.2018 DE 102018205872
(43) Veröffentlichungstag der Anmeldung: 24.02.2021
(73) Patentinhaber: Robert Bosch GmbH, 70442 Stuttgart (DE)
(72) Erfinder: STADTMUELLER, Steffen, 70372 Stuttgart (DE); KAILER, Michael, 71116 Gaertringen (DE); BAUER, Benjamin, 88090 Immenstaad (DE); RAUSCHECKER, Ursula, 71563 Affalterbach (DE); WALTER, Sven, 70376 Stuttgart (DE); KLOTZ, Peter, 71263 Weil Der Stadt (DE); SCHAERTEL, Markus, 88690 Uhldingen-Muehlhofen (DE)
(86) Internationale Anmeldenummer: PCT/EP2019/059791
(87) Internationale Veröffentlichungsnummer: WO 2019/201911

(56) Entgegenhaltungen:
- WAGNER CONSTANTIN ET AL: "The role of the Industry 4.0 asset administration shell and the digital twin during the life cycle of a plant", 2017 22ND IEEE INTERNATIONAL CONFERENCE ON EMERGING TECHNOLOGIES AND FACTORY AUTOMATION (ETFA), IEEE, 12. September 2017 (2017-09-12), Seiten 1-8, XP033292917, DOI: 10.1109/ETFA.2017.8247583 [gefunden am 2018-01-04]
- Lutz Rauchhaupt ET AL: "Network-based Communication for Industrie 4.0 - Proposal for an Administration Shell", , 1. November 2016 (2016-11-01), Seiten 1-26, XP055596048, Berlin Gefunden im Internet: URL:https://www.plattform-i40.de/PI40/Reda ktion/EN/Downloads/Publikation/network-bas ed-communication-for-i40-it-summit.pdf?__b lob=publicationFile&v=4 [gefunden am 2019-06-12]
- Heinz Bedenbender ET AL: "White Paper - Beispiele zur Verwaltungsschale der Industrie 4.0-Komponente - Basisteil", , 1. November 2016 (2016-11-01), Seiten 1-24, XP055596056, Frankfurt am Main Gefunden im Internet: URL:https://www.zvei.org/fileadmin/user_up load/Presse_und_Medien/Publikationen/2016/ November/Beispiele_zur_Verwaltungsschale_d er_Industrie_4.0-Komponente_-_Basisteil/Be ispiele-Verwaltungsschale-Industrie-40-Kom ponente-White-Paper-Final.pdf [gefunden am 2019-06-12]
- Peter Adolphs ET AL: "Struktur der Verwaltungsschale - Fortentwicklung des Referenzmodells für die Industrie 4.0-Komponente", , 1. April 2016 (2016-04-01), Seiten 1-50, XP055596059, Berlin Gefunden im Internet: URL:https://www.zvei.org/fileadmin/user_up load/Presse_und_Medien/Publikationen/2016/ april/Struktur_der_Verwaltungsschale/Struk tur-der-Verwaltungsschale.pdf [gefunden am 2019-06-12]
- DIEDRICH CHRISTIAN ET AL: "Semantic interoperability for asset communication within smart factories", 2017 22ND IEEE INTERNATIONAL CONFERENCE ON EMERGING TECHNOLOGIES AND FACTORY AUTOMATION (ETFA), IEEE, 12. September 2017 (2017-09-12), Seiten 1-8, XP033293023, DOI: 10.1109/ETFA.2017.8247689 [gefunden am 2018-01-04]

## Beschreibung

### Stand der Technik

Die Erfindung geht aus von einem Verfahren zur Kommunikation zwischen einer Anwendung und einer Maschine in einer Fertigung mit den Merkmalen des unabhängigen Anspruchs. Im Allgemeinen wird der Begriff "digitaler Zwilling" so verstanden, dass der digitale Zwilling eine digitale Repräsentanz eines Objekts der realen Welt darstellt. Der digitale Zwilling ermöglicht dabei einen Datenaustausch zwischen dem Objekt der realen Welt und digitalen Systemen.

WAGNER CONSTANTIN ET AL: "The role of the Industry 4.0 asset administration shell and the digital twin during the life cycle of a plant",2017 22ND IEEE INTERNATIONAL CONFERENCE ON EMERGING TECHNOLOGIES AND FACTORY AUTOMATION (ETFA), IEEE, 12. September 2017 (2017-09-12), Seiten 1-8,DOI: 10.1109/ETFA.2017.8247583 offenbart das Übertragen von Daten von Maschinen zu Anwendungen.

### Vorteile der Erfindung

Das erfindungsgemäße Verfahren zur Kommunikation zwischen einer Anwendung und einer Maschine in einer Fertigung hat den Vorteil, dass durch die klare Trennung der Beschreibungsdaten und der Kommunikationsinformationen die Erstellung des digitalen Zwillings vereinfacht wird. Die Beschreibungsdaten können durch das Beschreibungsmetamodell klar und nachvollziehbar strukturiert werden. Das Beschreibungsmetamodell erlaubt dabei besonders einfach bereits vorstrukturierte Beschreibungsdaten zu verwenden, wodurch die Erzeugung dieser Daten vereinfacht wird. Alternativ können durch das Beschreibungsmetamodell aber auch beliebige Beschreibungsdaten für spezielle Anwendungsfälle erstellt werden. Durch die klare Trennung der Beschreibungsdaten und Kommunikationsinformationen wird insbesondere auch die Skalierbarkeit, d. h. die Anwendung sowohl bei simplen wie auch komplexen Maschinen in einer Fertigung oder physikalischen Objekten ermöglicht bzw. es ist auch möglich, einen digitalen Zwilling für eine große Maschine in einer Fertigung aus den bereits bekannten digitalen Zwillingen einer Vielzahl von kleinen Maschinen in einer Fertigung zusammenzusetzen. Weiterhin wird durch die klare Trennung der Beschreibungsdaten und Kommunikationsinformationen die Ausgestaltung der Beschreibungsdaten unabhängig von den tatsächlichen Implementierungen. Die Beschreibungsdaten sind daher unabhängig von den verwendeten Kommunikationsmitteln, wie Bussystemen oder Kommunikationsprotokollen oder auch den für die Umsetzung verwendeten Rechnersystemen oder Betriebssystemen. Das Verfahren ermöglicht eine skalierbare Erzeugung einer beliebig großen Anzahl von digitalen Zwillingen, da eine Vielzahl von digitalen Zwillingen für unterschiedliche Maschinen in einer Fertigung oder physikalische Objekte und unterschiedliche Anwendungen effizient erzeugt werden können, d.h. der Aufwand zur Erzeugung digitaler Zwillinge wird minimiert.

Weitere Vorteile und Verbesserungen ergeben sich durch die Maßnahmen der abhängigen Patentansprüche. Die Beschreibungsdaten enthalten zweckmäßigerweise eine Bezeichnung und Eigenschaften der Daten. Bei den allgemeinen Charakteristika handelt es sich um allgemeine Eigenschaften der Daten, die insbesondere in einer Vielzahl von Fällen verwendet werden können. Diese allgemeinen Charakteristika sind daher teilweise im Beschreibungsmetamodell als Bibliothek enthalten. Das Beschreibungsmetamodell ist aber nicht abgeschlossen und erlaubt daher spezielle Charakteristika zu definieren, die insbesondere spezifische Eigenschaften eines physikalischen Objekts oder einer Maschine in einer Fertigung zu beschreiben. Generell erlauben sowohl die allgemeinen wie auch die speziellen Charakteristika eine semantische Auslegung oder Interpretation, so dass diesen Charakteristika klare Eigenschaften der Maschine in einer Fertigung oder des physikalischen Objekts zugeordnet sind. Besonders typische Charakteristika stellen einen Messwert der Maschine in einer Fertigung oder ein Steuerwert für die Maschine dar. Diese können dabei eine Vielzahl von Eigenschaften darstellen, aber auch eine inhaltliche Interpretation bezüglich einer Reihenfolge, einer Zeitdauer, eines zulässigen Wertebereichs, eines anzuwendenden Maßes, einer Maßeinheit, der Datenstruktur oder der Bedeutung der Daten hinsichtlich der Maschine ermöglichen. Die Kommunikationsinformationen umfassen typischerweise Schnittstelleninformationen und Kommunikationsprotokolle. Durch die Schnittstellen werden Adressen zum Austausch von digitalen Daten mit dem digitalen Zwilling angegeben. Durch die Kommunikationsprotokolle werden die Methoden angegeben, die für die Kommunikation mit den angegebenen Schnittstellen erforderlich sind. Besonders einfach erfolgt die Erstellung eines digitalen Zwillings, wenn die Beschreibungsdaten einem Katalog mit Typen von Beschreibungsdaten entnommen werden. Dabei können auch ganze Gruppen von Beschreibungsdaten, die typischerweise für einen digitalen Zwilling einer bestimmten Maschine von Bedeutung sind, als Katalog vorgehalten werden.

Die Erfindung wird durch die Ansprüche definiert.

### Zeichnungen

Ausführungsbeispiele der Erfindung werden in den Zeichnungen dargestellt und in der dazugehörigen Beschreibung näher erläutert.

Es zeigen:
- Figur 1: eine Maschine in einer Fertigung, einen dazugehörigen digitalen Zwilling und eine Anwendung, die die Daten des digitalen Zwillings nutzt,
- Figur 2: eine Maschine in einer Fertigung, einen digitalen Zwilling und eine Anwendung,
- Figur 3: eine Erstellung von Beschreibungsdaten, wobei jede Eigenschaft im Metamodell einzeln definiert wird,
- Figur 4: eine Zusammenstellung von Beschreibungsdaten, bei denen im Metamodell aus einer Bibliothek von Eigenschaften einzelner Eigenschaften ausgewählt werden,
- Figur 5: die Erstellung von Beschreibungsdaten, in dem im Metamodell aus einem Katalog verschiedener Eigenschaftsgruppen eine Eigenschaftsgruppe ausgewählt wird, und
- Figur 6: eine Beispielsstruktur des Beschreibungsmetamodells.

### Beschreibung der Erfindung

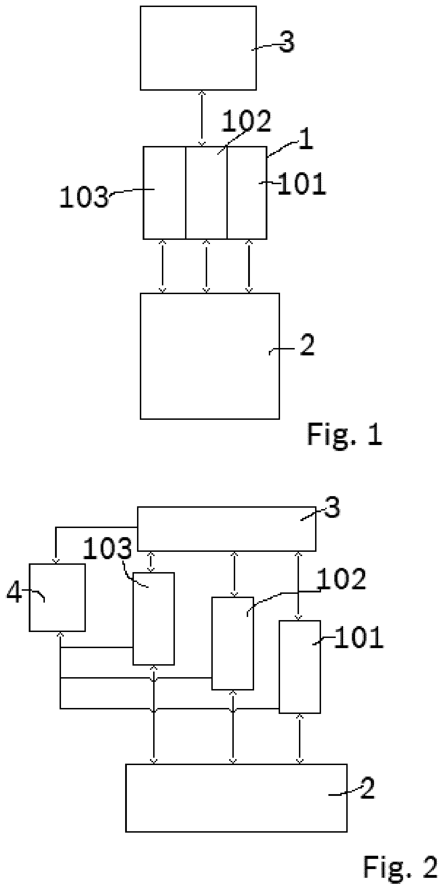

In der Figur 1 wird schematisch ein digitaler Zwilling 1 dargestellt, der für einen Datenaustausch zwischen einer Maschine 2 in einer Fertigung und einer Anwendung 3 ausgelegt ist.

Bei der Anwendung 3 handelt es sich um eine digitale Anwendung, d.h. um ein Programm, welches auf einem Rechner oder Verbund von mehreren Rechnern realisiert ist. Durch eine derartige Anwendung 3 kann ein menschlicher Benutzer von der Anwendung 3 Informationen über die Maschine in einer Fertigung 2 abfragen oder durch entsprechende Steuerbefehle Handlungen der Maschine in einer Fertigung 2 auslösen oder steuern.

Bei der Maschine in einer Fertigung 2 handelt es sich typischerweise um eine Werkzeugmaschine, ein Bearbeitungszentrum oder jede andere Maschine in einer Fertigung. Alternativ können auch mehrere derartige Maschinen zu einem physikalischen Objekt zusammengefasst werden, beispielsweise mehrere Maschinen, die zusammen eine gesamte Fabrik bilden. Andere Maschinen, die nicht in einer Fertigung sind, oder andere Gegenstände die Daten mit einer Anwendung 3 austauschen können, werden einfach als physikalische Objekte bezeichnet. Im Folgenden werden die Begriffe Maschine oder physikalisches Objekt jeweils als austauschbar betrachtet. Weiterhin sind auch Kombinationen von digitalen Anwendungen und realen Maschinen oder physikalischen Objekten vorstellbar oder Simulationen von physikalischen Objekten, die im Sinn der Erfindung jeweils als physikalisches Objekt 2 betrachtet werden, was dann durch eine digitalen Zwilling 1 mit der Anwendung 3 verbunden ist.

Der digitale Zwilling 1 ist jeweils mit einem Verbindungspfeil mit der Anwendung 3 bzw. mit mehreren Verbindungspfeilen mit dem physikalischen Objekt 2 verbunden. Diese Pfeile stellen jeweils einen Austausch von Daten dar, der je nach Natur dieser Daten in die eine oder andere Richtung oder aber in beide Richtungen erfolgen kann. Als Beispiel wird in der Figur 1 ein erster Teil 101, ein zweiter Teil 102 und ein dritter Teil 103 des digitalen Zwillings 1 gezeigt. Bei dem ersten Teil 101 handelt es sich beispielsweise um das Auslesen eines Sensorwerts des physikalischen Objekts 2, d.h. Daten werden vom physikalischen Objekt 2 durch den digitalen Zwilling 1 an die Anwendung 3 gegeben. Bei dem zweiten Beispiel 102 werden Steuerbefehle der Anwendung 3 an den physikalischen Zwilling 2 weitergeleitet. Durch den dritten Teil 103 werden Zustandsänderungen oder Diagnosedaten zwischen der Anwendung 3 und dem physikalischen Objekt 2 ausgetauscht. Dabei kann beispielsweise von der Anwendung 3 ein Ein- oder Ausschaltsignal an das physikalische Objekt weitergegeben werden, und beim Auftreten einer Störung kann das physikalische Objekt 2 in dem physikalischen Objekt 2 generierte Fehlercodes an die Anwendung 3 geben. Je nach Funktion kann somit ein Datenaustausch jeweils nur in eine Richtung oder aber in beide Richtungen gleichzeitig erfolgen.

Weiterhin hängt die Richtung des Datenaustausches auch noch von den von dem Datentausch verwendeten Kommunikationsprotokollen ab. Beispielsweise kann vorgesehen sein, dass der digitale Zwilling 1 Daten kontinuierlich abfragt und an einer Speicheradresse für die Anwendung 3 bereithält. In diesem Fall würde die Anwendung 3 jeweils nur einen aktuellen Wert des physikalischen Objekts 2 beim digitalen Zwilling 1 abfragen. Es können aber auch andere Kommunikationsprotokolle verwendet werden, bei dem die Anwendung 3 zunächst eine Anfrage an den digitalen Zwilling 1 richtet, der daraufhin die gewünschten Daten durch eine Kommunikation mit dem physikalischen Objekt 3 holt und dann an die Anwendung 3 weitergibt. In diesem Fall würde die Kommunikation in beide Richtungen erfolgen.

Bei der Implementierung der einzelnen Teile des digitalen Zwillings 101, 102, 103 ist es nicht erforderlich, für die Implementierung ein einheitliches Gerät, Rechner oder Rechnersystem vorzusehen. Vielmehr können die einzelnen Bestandteile 101, 102, 103 eines digitalen Zwillings 1 auf unterschiedliche Systeme, insbesondere Rechnersysteme, in unterschiedlichen Ausgestaltungen verteilt sein. Dies wird in der Figur 2 schematisch dargestellt.

In der Figur 2 wird wieder eine Anwendung 3 und ein physikalisches Objekt 2 gezeigt, wobei jedoch die verschiedenen Teile des digitalen Zwillings 101, 102, 103 nicht als einheitlicher Block, sondern auseinandergezogen dargestellt sind. Beispielsweise kann der erste Bestandteil 101 durch einen Sensor realisiert werden, der direkt in dem physikalischen Objekt 2 angebracht ist, und der gleich digitalen Daten auf einem Bussystem zur Verfügung stellt. Alternativ könnte eine derartige Erfassung von Messdaten des physikalischen Objekts 2 auch dadurch erfolgen, dass in der Nähe des physikalischen Objekts 2 eine Kamera angebracht ist, durch die bestimmte Messwerte des physikalischen Objekts 2 erfasst werden. Der Teil 102 des digitalen Zwillings hat die Funktion Steuerdaten von der Anwendung 3 an das physikalische Objekt 3 zu geben. Die Ansteuerung des physikalischen Objekts kann beispielsweise durch einen Steuerrechner des physikalischen Objekts 2 erfolgen und die Implementierung des digitalen Zwillings 102 ist dann unmittelbar in diesem Steuerrechner integriert. Der Bestandteil 103 kann beispielsweise in einem Fabrikationsrechner realisiert sein, der eine Vielzahl von physikalischen Objekten 2 verwaltet. Obwohl somit durch den digitalen Zwilling hier ein digitales Abbild oder Repräsentanz des physikalischen Objekts 2 entsteht, können die einzelnen Teile 101, 102, 103 dieses digitalen Zwillings 1 in völlig unterschiedlichen Rechnersystemen, insbesondere auch mit unterschiedlichen Betriebssystemen realisiert sein.

Um diese unterschiedlichen Ausgestaltungen der Implementierung des digitalen Zwillings 1 Rechnung zu tragen, ist ein Verzeichnis 4 vorgesehen, in dem Informationen bezüglich der digitalen Zwillinge abgelegt sind. In dem Verzeichnis 4, welches gelegentlich auch als Registry bezeichnet wird, sind Kommunikationsinformationen abgelegt, die Eigenschaften der erzeugten digitalen Zwillinge, die von den Implementierungen zur Verfügung gestellt werden, enthalten. Weiterhin enthält das Verzeichnis 4 eine Kennzeichnung, welche Daten für welches physikalische Objekt 2 im digitalen Zwilling implementiert sind. Weiterhin enthält das Verzeichnis 4 Informationen über die Schnittstellen, d.h. die Adressen, die für den Datenaustausch zwischen dem digitalen Zwilling 1 mit der Anwendung 3 verwendet werden. Bezüglich dieser Schnittstellen sind dann auch noch Kommunikationsprotokolle gespeichert, durch die angegeben wird, mit welchen Methoden oder wie mit den Schnittstellen kommuniziert wird. Weiterhin enthält das Verzeichnis 4 Verweise auf die Beschreibungsdaten, welche die über eine Schnittstelle austauschbaren Daten beschreiben. Durch diese Bezeichnungen des physikalischen Objekts 2 wie auch der Bezeichnungen der Daten in den Implementierungen der digitalen Zwillinge werden die durch die Anwendung 3 abgerufenen Daten eindeutig identifizierbar. Es ist somit eindeutig nachvollziehbar von welchem physikalischen Objekt die Daten stammen und welche Inhalte in den Daten enthalten sind.

Schematisch wird in der Figur 2 eine Verbindung zwischen den einzelnen Teilen der Implementierung des digitalen Zwillings 101, 102, 103 angegeben, durch die dargestellt wird, dass die Informationen, die in der Implementierung enthalten sind, an das Verzeichnis 4 gegeben werden. Ebenfalls möglich ist auch, dass bei der Erstellung der Implementierung zeitgleich auch Einträge in das Verzeichnis 4 erstellt werden. Durch Auslesen der Informationen im Verzeichnis 4 wird die Anwendung 3 in die Lage versetzt, mit dem digitalen Zwilling 1 zu kommunizieren. Insbesondere können dabei auch verschiedene Anwendungen 3, die mit dem physikalischen Objekt 2 interagieren wollen durch Auslesen des Verzeichnisses 4 alle Informationen erhalten, die für einen Datenaustausch mit dem physikalischen Objekt 2 erforderlich sind.

Dabei kann die Anwendung 3 die Informationen aus dem Verzeichnis 4 beispielsweise bei einem Start eines Rechners, auf dem die Anwendung 3 ausgeführt wird, auslesen. Es kann aber auch ein Einlesen der Informationen aus dem Verzeichnis in die Anwendung 3 in regelmäßigen Zeitabständen oder als Reaktion auf ein Ereignis erfolgen. Als Ereignis kann dabei beispielsweise eine Fehlermeldung, das bestimmte Daten des digitalen Zwillings 1 nicht mehr zugänglich sind, sein oder ein Ereignis welche manuell von einem Benutzer bspw. einem Servicetechniker ausgelöst wird.

Für die Erzeugung des digitalen Zwillings 1 müssen somit zunächst Beschreibungsdaten erstellt werden, die die Eigenschaften der digitalen Daten, die mit der Maschine oder dem physikalischen Objekt 2 ausgetauscht werden, enthalten. Zu diesen Informationen müssen dann noch Kommunikationsinformationen bereitgestellt werden, wobei diese Kommunikationsinformationen Informationen hinsichtlich der Adressen enthalten, mit denen eine Anwendung 3 Daten von den Implementierungen 101, 102, 103 abrufen kann. Weiterhin enthalten diese Kommunikationsinformationen auch Informationen zu den dazu zu verwendenden Kommunikationsprotokollen. Wie bereits oben ausgeführt, können die einzelnen Implementierungen auf unterschiedlichen Rechnersystemen mit unterschiedlichen Betriebssystemen und somit auch unterschiedlichen Kommunikationsprotokollen realisiert sein. All diese Informationen werden in den Kommunikationsinformationen zusammengefasst.

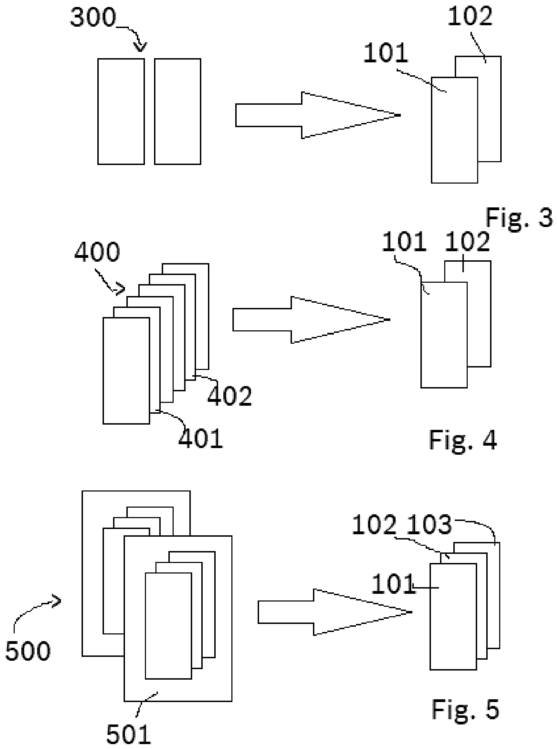

In den Figuren 3 bis 5 werden nun verschiedene Methoden beschrieben, wie anhand des Beschreibungsmetamodells die Beschreibungsdaten für die Erzeugung des digitalen Zwillings zusammengestellt werden. Auf der linken Seite ist jeweils das Beschreibungsmetamodell und auf der rechten Seite die damit erzeugten Implementierungen des digitalen Zwillings.

In der Figur 3 werden auf der linken Seite anhand des Beschreibungsmetamodells einzelner Dateien mit Beschreibungsdaten erzeugt. Dabei kann anhand des Beschreibungsmetamodells ein bestimmter Rahmen für die Daten vorgegeben sein, durch den eine Struktur der Daten vorgegeben wird. In einer besonders einfachen Ausgestaltung kann dafür einfach ein Formular vorgesehen werden, dessen einzelne Eigenschaften durch einen Benutzer, der einen derartigen digitalen Zwilling erstellen will, eingetragen wird. Das Beschreibungsmetamodell sollte jedoch hinreichende Möglichkeiten bieten, auch völlig neue Daten, die nur für einzelne Spezialanwendungen benötigt werden, in dem Beschreibungsmetamodell einzeln zu definieren, so dass daraus die Implementierungen 101, 102 erstellt werden können.

In der Figur 4 wird eine alternative Erzeugung der Implementierungen 101, 102 gezeigt. Dazu ist im Beschreibungsmetamodell eine Bibliothek 400 von verschiedenen Beschreibungsdaten vorgesehen, die jeweils aus Datensätzen bestehen, die einzelne Eigenschaften von digitalen Daten enthalten. In der Bibliothek 400 ist auch ein Datensatz 401 und ein Datensatz 402 enthalten, die jeweils die Beschreibungen bezüglich der Implementierungen 101, 102 enthalten. Durch Auswahl dieser Datensätze aus der Bibliothek 400 kann durch Hinzufügen der notwendigen Kommunikationsinformationen sehr einfach die Implementierung 101, 102 erzeugt werden.

In der Figur 5 wird ein alternatives Modell gezeigt, bei dem das Beschreibungsmetamodell eine Bibliothek 500 mit kompletten Daten für unterschiedliche physikalische Objekte enthält. In einem derartigen Datensatz sind alle notwendigen Daten bezüglich der Eigenschaften von digitalen Daten eines kompletten physikalischen Objekts enthalten. Durch Auswahl des Datensatzes 501 werden somit durch Hinzufügen der notwendigen Kommunikationsinformationen die Implementierungen 101, 102, 103 wie sie in der Figur 2 dargestellt sind, mit einem einzigen Schritt erzeugt.

Für viele Anwendungen, insbesondere bei größeren Systemen, werden die in den Figuren 3 bis 5 gezeigten Methoden zeitgleich verwendet. Für eine Vielzahl von standardisierten physikalischen Objekten, beispielsweise gleichartige Maschinen in einer Fertigung, wird typischerweise die Methode nach der Figur 5 verwendet, da jeder dieser Maschinen gleichartig ausgebildet ist und daher auch gleichartig als digitaler Zwilling realisiert wird. Weiterhin kann es auch noch Abweichungen geben, dahingehend, dass einzelne der physikalischen Objekte geringfügig anders ausgebildet sind, als die anderen. Beispielsweise können sich im Prinzip gleichartige Fertigungssysteme hinsichtlich der verwendeten Werkzeuge oder dergleichen unterscheiden. Für eine derartige Konstellation bietet sich dann die Vorgehensweise nach der Figur 4 an, bei der je nach Ausgestaltung der konkreten Maschine aus der Bibliothek 400 für einzelne Datensätze herausgegriffen werden, um maßgeschneidert für jedes physikalische Objekt eine entsprechende Implementierung zu erstellen. Weiterhin können auch einzelne physikalische Objekte vorgesehen sein, die bisher so noch nicht durch digitale Zwillinge abgebildet sind, und die dann einzeln nach der Figur 3 erstellt werden müssen. Diese Vorgehensweise ist auch dann sinnvoll, wenn eine Vielzahl von bereits als digitaler Zwilling realisierte Objekte zu einer Gesamtbetrachtung zusammengefasst werden soll. Wenn beispielsweise in einer Fertigung ein Indikator für einen Gesamtzustand der Fertigung gewünscht ist, so kann nach der Vorgehensweise der Figur 3 einfach ein bestimmtes Datum aller Maschinen der Fertigung als Implementierung definiert werden, um so einen Gesamtüberblick über eine Fertigungsanlage zu erhalten.

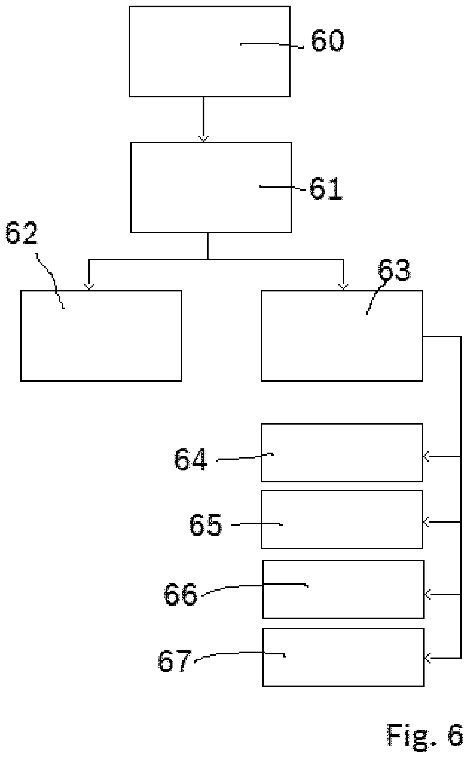

In der Figur 6 wird schematisch das Metamodell dargestellt, mit dem die Beschreibungsdaten zur Erstellung der Implementierungen der digitalen Zwillinge erstellt werden. In einem ersten Block 60 erfolgt zunächst eine Bezeichnung einer Eigenschaft, wobei durch diese Benennung die Beschreibungsdaten eindeutig identifizierbar sind. Im Block 60 kann beispielsweise auch noch eine Beschreibung der entsprechenden Daten enthalten sein. Die Benennung 60 weist Eigenschaften 61 auf, wobei im Block 61 zunächst die Eigenschaft mit einem Namen versehen wird und ebenfalls mit einer lesbaren Beschreibung für einen Nutzer des Systems versehen wird. Die Eigenschaften 61 weisen Charakteristika auf, wobei spezielle Charakteristika 62 und allgemeine Charakteristika 63 vorgesehen sind. Bei den allgemeinen Charakteristika 63 handelt es sich üblicherweise um Eigenschaften, die allgemein sind und somit vielfach bei unterschiedlichen Implementierungen wieder verwendbar sind. Ein typisches Beispiel für eine derartige Eigenschaft wäre beispielsweise ein Messgerät für eine Temperatur. Der Eigenschaft Temperatur wird die allgemeine Charakteristik Ofentemperatur hinzugefügt. Der allgemeinen Charakteristik Ofentemperatur 63 werden dann noch weitere Details hinzugefügt. Durch den Verweis auf Block 64 wird klargestellt, dass es sich um eine Quantität Temperatur handelt. Durch diese Information wird klargestellt dass sich dieser Messwert mit anderen Temperaturen vergleichen lässt. Durch den Block 65 wird klargestellt, dass es sich um eine Messung, d.h. um eine gemessene Temperatur handelt. Es handelt sich somit nicht um eine berechnete oder simulierte Temperatur. Durch den Block 66 werden dieser Temperatur dann Grenzen, beispielsweise zwischen 0 und 300 Grad zugeordnet. Weiterhin ist der Ofentemperatur die Einheit 67, beispielsweise Grad Kelvin zugeordnet.

Der Eigenschaft 61 kann aber auch eine spezielle Charakteristik 62 zugeordnet werden. Bei derartigen speziellen Charakteristika handelt es sich um Eigenschaften, die speziell für eine Anwendung oder speziell für ein physikalisches Objekt sind. Eine derartige spezielle Charakteristik kann beispielsweise in einer Beschreibung von Fehlercodes, die einer Maschine zugeordnet sind, die das physikalische Objekt darstellt, bestehen. Da diese speziellen Charakteristika eine Eigenschaft beschreiben, die nicht allgemeingültig ist, muss diese in der Regel für jeden Anwendungsfall einzeln festgelegt werden.

Anhand dieses Beschreibungsmetamodells werden die Beschreibungsdaten die Eigenschaften der digitalen Daten enthalten, die zwischen dem physikalischen Objekt 2 und der Anwendung 3 ausgetauscht werden beschrieben. Zu diesen Beschreibungsdaten müssen dann noch Kommunikationsinformationen und eine Bezeichnung des jeweiligen physikalischen Objekts hinzugefügt werden, um zu einer konkreten Implementierung des digitalen Zwillings zu gelangen. Diese Informationen werden dann zur Erstellung der einzelnen Implementierungen 101, 102, 103 und des Verzeichnisses 4 genutzt. Durch die durch das Beschreibungsmetamodell beschriebenen Eigenschaften werden die Beschreibungsdaten für die Anwendung 3 interpretierbar. Durch die Kommunikationsinformationen werden die Daten des physikalischen Zwillings 1 für die Anwendung 3 frei zugänglich, dahingehend, dass die angegebenen Adressen nutzen, um mit den Kommunikationsprotokollen Informationen vom digitalen Zwilling 1 auszulesen oder an den digitalen Zwilling 1 zu geben.

## Patentansprüche

1. Verfahren zur Kommunikation zwischen einer Anwendung (3) und einem physikalischen Objekt (2) mittels eines digitalen Zwillings (1) des physikalischen Objekts (2), wobei anhand eines Beschreibungsmetamodells Beschreibungsdaten, die Eigenschaften von digitalen Daten des physikalischen Objekts (2) enthalten, erzeugt werden, wobei Kommunikationsinformationen erstellt werden und zur Erstellung des digitalen Zwillings (1) die Beschreibungsdaten und die Kommunikationsinformationen und eine Bezeichnung des physikalischen Objekts (2) zusammengefügt und in einem Verzeichnis (4) als Informationen gespeichert werden, die die Anwendung (3) in die Lage versetzen mit dem digitalen Zwilling (1) zu kommunizieren, wobei die Anwendung (3) so durch Auslesen des Verzeichnisses (4) alle notwendigen Informationen für einen Datenaustausch mit dem physikalischen Objekt (2) erhält und für einen Datenaustausch mit dem physikalischen Objekt (2) verwendet.

2. Verfahren nach Anspruch 1, **dadurch gekennzeichnet, dass** die Anwendung (3) die Informationen aus dem Verzeichnis (4) bei einem Start eines Rechners auf dem die Anwendung (3) ausgeführt wird oder in regelmäßigen Zeitabständen oder als Reaktion auf ein Ereignis ausliest.

3. Verfahren nach Anspruch 1 oder 2, **dadurch gekennzeichnet, dass** durch die digitalen Daten Sensorwerte, Zustandsänderungen oder Diagnosedaten von dem physikalischen Objekt (2) an die Anwendung (3) oder Steuerdaten von der Anwendung (3) an das physikalische Objekt (2) übertragen werden.

4. Verfahren nach einem der vorhergehenden Ansprüche, **dadurch gekennzeichnet, dass** durch das Beschreibungsmetamodell allgemeine Charakteristika für die Eigenschaften der digitalen Daten angegeben werden.

5. Verfahren nach Anspruch 4, **dadurch gekennzeichnet, dass** durch die allgemeinen Charakteristika die Eigenschaften der Daten hinsichtlich einer semantischen Interpretierbarkeit, bezüglich einer Reihenfolge, einer Zeit, einer Zeitdauer, eines zulässigen Wertebereichs, eines anzuwendenden Maßes, einer Maßeinheit, der Datenstruktur, oder der Bedeutung der Daten hinsichtlich des physikalischen Objekts (2) bezeichnet werden.

6. Verfahren nach einem der vorhergehenden Ansprüche, **dadurch gekennzeichnet, dass** durch das Beschreibungsmetamodell durch zusätzliche spezielle Charakteristika spezifische Eigenschaften des physikalischen Objekts (2) bezeichnet werden.

7. Verfahren nach einem der vorhergehenden Ansprüche, **dadurch gekennzeichnet, dass** durch die Kommunikationsinformationen Schnittstellen und Kommunikationsprotokolle eines digitalen Zwillings (1) angegeben werden.

8. Verfahren nach Anspruch 7, **dadurch gekennzeichnet, dass** durch die Schnittstellen Adressen zum Austausch von digitalen Daten eines digitalen Zwillings (1) angegeben werden.

9. Verfahren nach Anspruch 7 oder 8, **dadurch gekennzeichnet, dass** durch die Kommunikationsprotokolle Methoden zur Kommunikation mit den Schnittstellen angegeben werden.

10. Verfahren nach einem der vorhergehenden Ansprüche, **dadurch gekennzeichnet, dass** die Beschreibungsdaten zur Erstellung des digitalen Zwillings (1) einem Katalog mit Typen von Beschreibungsdaten entnommen werden.

11. Verfahren nach einem der vorhergehenden Ansprüchen, **dadurch gekennzeichnet, dass** der digitale Zwilling (1) eine Vielzahl von Beschreibungsdaten aufweist, wobei die Vielzahl von Beschreibungsdaten einem Katalog von Gruppen von Beschreibungsdaten entnommen wird.

12. Verfahren nach einem der vorhergehenden Ansprüchen, **dadurch gekennzeichnet, dass** das physikalische Objekt (2) als eine Maschine in einer Fertigung, als Zusammenfassung mehrere derartige Maschinen, als Maschinen die nicht in einer Fertigung sind, als andere Gegenstände die Daten mit einer Anwendung (3) austauschen, oder als Kombinationen von digitalen Anwendungen und Maschinen oder Simulationen ausgebildet ist.

## Claims

1. Method for communication between an application (3) and a physical object (2) by way of a digital twin (1) of the physical object (2), wherein description data that contain properties of digital data of the physical object (2) are produced based on a description metamodel, wherein communication information is created and, in order to create the digital twin (1), the description data and the communication information and a name of the physical object (2) are combined and stored in a directory (4) as information that gives the application (3) the ability to communicate with the digital twin (1), wherein the application (3) thus receives all of the information required for a data exchange with the physical object (2) by reading the directory (4) and uses it for a data exchange with the physical object (2).

2. Method according to Claim 1, **characterized in that** the application (3) reads the information from the directory (4) upon booting of a computer on which the application (3) is executed or at regular time intervals or in response to an event.

3. Method according to Claim 1 or 2, **characterized in that** the digital data transmit sensor values, state changes or diagnostic data from the physical object (2) to the application (3) or control data from the application (3) to the physical object (2).

4. Method according to one of the preceding claims, **characterized in that** the description metamodel indicates general characteristics for the properties of the digital data.

5. Method according to Claim 4, **characterized in that** the general characteristics indicate the properties of the data with regard to a semantic interpretability, with regard to an order, a time, a duration, a permissible value range, a measure to be applied, a unit of measure, the data structure, or the significance of the data with regard to the physical object (2).

6. Method according to one of the preceding claims, **characterized in that** the description metamodel denotes specific properties of the physical object (2) through additional special characteristics.

7. Method according to one of the preceding claims, **characterized in that** the communication information indicates interfaces and communication protocols of a digital twin (1).

8. Method according to Claim 7, **characterized in that** the interfaces indicate addresses for the exchange of digital data of a digital twin (1).

9. Method according to Claim 7 or 8, **characterized in that** the communication protocols indicate methods for communicating with the interfaces.

10. Method according to one of the preceding claims, **characterized in that** the description data for creating the digital twin (1) are taken from a catalogue containing types of description data.

11. Method according to one of the preceding claims, **characterized in that** the digital twin (1) contains a multiplicity of description data, wherein the multiplicity of description data is taken from a catalogue of groups of description data.

12. Method according to one of the preceding claims, **characterized in that** the physical object (2) is designed as a machine in a production facility, as a combination of multiple such machines, as machines that are not in a production facility, as other objects that exchange data with an application (3), or as a combination of digital applications and machines or simulations.

## Revendications

1. Procédé de communication entre une application (3) et un objet physique (2) au moyen d'un jumeau numérique (1) de l'objet physique (2), dans lequel des données de description qui contiennent des propriétés de données numériques de l'objet physique (2) sont générées à l'aide d'un métamodèle de description, dans lequel des informations de communication sont créées, et pour la création du jumeau numérique (1), les données de description et les informations de communication et une désignation de l'objet physique (2) sont rassemblés et stockées dans un répertoire (4) sous forme d'informations qui permettant à l'application (3) de communiquer avec le jumeau numérique (1), dans lequel l'application (3) obtient ainsi par la lecture du répertoire (4) toutes les informations nécessaires à un échange de données avec l'objet physique (2) et les utilise pour un échange de données avec l'objet physique (2).

2. Procédé selon la revendication 1, **caractérisé en ce que** l'application (3) lit les informations du répertoire (4) au démarrage d'un ordinateur sur lequel l'application (3) est exécutée ou à intervalles de temps réguliers ou en réaction à un résultat.

3. Procédé selon la revendication 1 ou 2, **caractérisé en ce que** les données numériques permettant de transmettre des valeurs de capteur, des changements d'état ou des données de diagnostic de l'objet physique (2) à l'application (3) ou de transmettre des données de commande de l'application (3) à l'objet physique (2) .

4. Procédé selon l'une quelconque des revendications précédentes, **caractérisé en ce que** le métamodèle de description permet d'indiquer des caractéristiques générales pour les propriétés des données numériques.

5. Procédé selon la revendication 4, **caractérisé en ce que** les caractéristiques générales permettent de désigner les propriétés des données en ce qui concerne l'interprétabilité sémantique, concernant un ordre, une heure, une durée, une plage de valeurs admissible, une mesure à appliquer, une unité de mesure, la structure de données, ou la signification des données en ce qui concerne l'objet physique (2).

6. Procédé selon l'une quelconque des revendications précédentes, **caractérisé en ce que** le métamodèle de description désigne par des caractéristiques spéciales supplémentaires des propriétés spécifiques de l'objet physique (2).

7. Procédé selon l'une quelconque des revendications précédentes, **caractérisé en ce que** les informations de communication indiquent des interfaces et des protocoles de communication d'un jumeau numérique (1).

8. Procédé selon la revendication 7, **caractérisé en ce que** les interfaces indiquent des adresses pour l'échange de données numériques d'un jumeau numérique (1) .

9. Procédé selon la revendication 7 ou 8, **caractérisé en ce que** les protocoles de communication indiquent des méthodes de communication avec les interfaces.

10. Procédé selon l'une quelconque des revendications précédentes, **caractérisé en ce que** les données de description pour la création du jumeau numérique (1) sont extraites d'un catalogue de types de données de description.

11. Procédé selon l'une quelconque des revendications précédentes, **caractérisé en ce que** le jumeau numérique (1) présente une pluralité de données de description, la pluralité de données de description étant extraite d'un catalogue de groupes de données de description.

12. Procédé selon l'une quelconque des revendications précédentes, **caractérisé en ce que** l'objet physique (2) est réalisé comme une machine dans un processus de fabrication, comme un regroupement de plusieurs de ces machines, comme des machines qui ne se trouvent pas dans un processus de fabrication, comme d'autres objets qui échangent des données avec une application (3) ou comme des combinaisons d'applications numériques et de machines ou de simulations.
